# DEMANDE DE BREVET EUROPEEN

(11) **EP 1 162 095 A1**
(43) Date de publication de la demande: **12.12.2001**
(21) Numéro de dépôt: 01401456.7
(22) Date de dépôt: 06.06.2001
(51) Int. Cl.: B60H 1/34

(54) **Ensemble d'aérateur occultable pour véhicule automobile et équipement correspondant**

(30) Priorité: 07.06.2000 FR 0007300
(71) Demandeur: Faurecia Industries, 92100 Boulogne-Billancourt (FR)
(72) Inventeur: Bois, Frédéric, 25200 Montbeliard (FR)
(74) Mandataire: Jacobson, Claude

(57) **Abrégé**

Cet ensemble d'aérateur est installé derrière une ouverture d'aération (6) ménagée dans un équipement intérieur (8) d'un véhicule automobile. Il comporte un aérateur (14) comprenant une buse d'aération et un couvercle de dissimulation (28) de forme sensiblement complémentaire à celle de l'ouverture d'aération (6).
L'aérateur (14) est articulé autour d'un axe de rotation (4), entre une position d'aération, dans laquelle la buse d'aération est alignée avec l'ouverture d'aération (6), et une position de repos dans laquelle le couvercle de dissimulation recouvre l'ouverture de la planche de bord. Le couvercle de dissimulation (28) est relié à l'aérateur de façon mobile radialement par rapport à l'axe de rotation (4).

Application aux aérateurs de planche de bord des véhicules automobiles.

## Description

La présente invention concerne un ensemble d'aérateur occultable destiné à être installé derrière une ouverture d'aération ménagée dans un équipement intérieur d'un véhicule automobile du type comportant:
- un aérateur comprenant une buse d'aération et une ouverture d'entrée d'un flux d'air, et
- un couvercle de dissimulation de forme sensiblement complémentaire à celle de l'ouverture d'aération,
l'aérateur étant articulé autour d'un axe de rotation par rapport audit équipement, entre une position angulaire d'aération dans laquelle la buse d'aération est sensiblement alignée avec l'ouverture d'aération et une position angulaire de repos dans laquelle le couvercle de dissimulation recouvre l'ouverture d'aération.

L'invention s'applique notamment aux aérateurs de planche de bord pour véhicules automobiles.

On connaît dans l'état de la technique des aérateurs occultables qui sont installés derrière une ouverture d'aération d'une planche de bord pour véhicule automobile.

Un tel aérateur comprend généralement une buse d'aération et une surface de dissimulation fixée sur l'aérateur. L'aérateur est monté de façon pouvant être basculé autour d'un axe horizontal entre une position angulaire d'aération et une position angulaire de repos. Dans la position d'aération, la buse se trouve sensiblement alignée avec l'ouverture de l'aération de la planche de bord, tandis que dans la position de repos, la surface de dissimulation est alignée avec ladite ouverture, afin de cacher l'aérateur.

Afin de garantir un bon effet de dissimulation, il est nécessaire que la surface de dissimulation recouvre l'ouverture et qu'elle soit alignée avec la surface visible de la planche de bord.

Un aérateur articulé comportant une surface de dissimulation fixée à l'aérateur ne permet un bon effet de dissimulation que dans des zones de la planche de bord en forme d'arc de cercle. L'utilisation d'un tel aérateur contraint donc la forme de la planche de bord à cet emplacement.

De plus, la tolérance de positionnement de l'aérateur par rapport à la planche de bord doit être très faible.

L'invention a pour but de pallier ces inconvénients et de proposer un aérateur occultable qui permette une plus grande liberté en ce qui concerne le choix de la forme de la planche de bord, ou de tout autre équipement incorporant l'aérateur à l'emplacement de ce dernier.

A cet effet, l'invention a pour objet un ensemble du type précité caractérisé en ce que le couvercle de dissimulation est relié à l'aérateur de façon mobile radialement par rapport à l'axe de rotation.

Suivant des modes particuliers de réalisation, l'invention peut comporter une ou plusieurs des caractéristiques indiquées dans les revendications dépendantes 2 à 14.

L'invention a également pour objet un équipement pour véhicule automobile comprenant un ensemble du type précité.

Suivant un mode particulier de réalisation, l'équipement constitue au moins une partie d'une planche de bord de véhicule automobile.

L'invention sera mieux comprise à la lecture de la description qui va suivre, donnée uniquement à titre d'exemple et faite en se référant aux dessins annexés, sur lesquels :
- la figure 1 est une vue schématique en perspective d'un aérateur selon l'invention, en position d'aération,
- la figure 2 est une vue de l'aérateur de la figure 1 dans une position intermédiaire,
- la figure 2A est une vue de détail, depuis l'intérieur de l'aérateur, de la transmission de l'aérateur proche de la position de repos,
- la figure 3 est une vue schématique de l'aérateur de la figure 1 en position de repos ; et
- la figure 4 est une vue de côté d'une variante d'un ensemble d'aérateur selon l'invention.

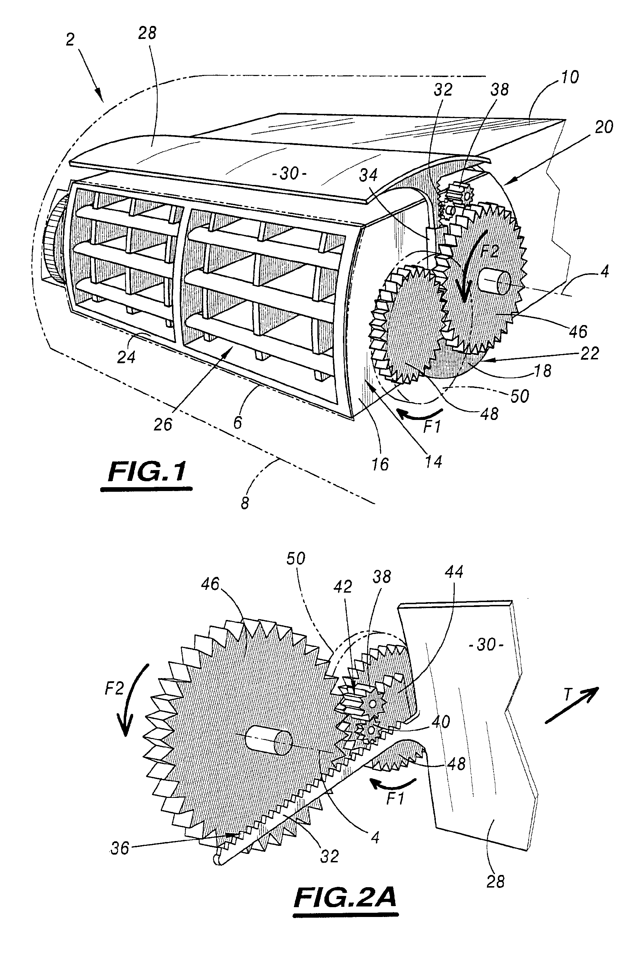

Sur la figure 1, on a représenté un ensemble d'aérateur selon l'invention désignée par la référence générale 2.

Les expressions « longitudinal » et « transversal » seront utilisées dans ce qui suit par rapport à un axe de basculement 4 de l'aérateur (voir ci-dessous).

L'ensemble d'aérateur 2 est monté dans un véhicule automobile derrière une ouverture d'aération 6 d'une planche de bord 8, indiquée schématiquement sur la figure 1.

La planche de bord 8 est en outre équipée d'une conduite d'aération 10.

Cette conduite d'aération 10 a une ouverture de sortie (non-visible) débouchant vers l'ouverture d'aération 6 de la planche de bord 8. La section transversale de l'ouverture d'aération 6 est en forme d'arc de cercle.

L'ensemble d'aérateur 2 comprend un aérateur 14 articulé autour de l'axe de basculement sur la planche de bord 8.

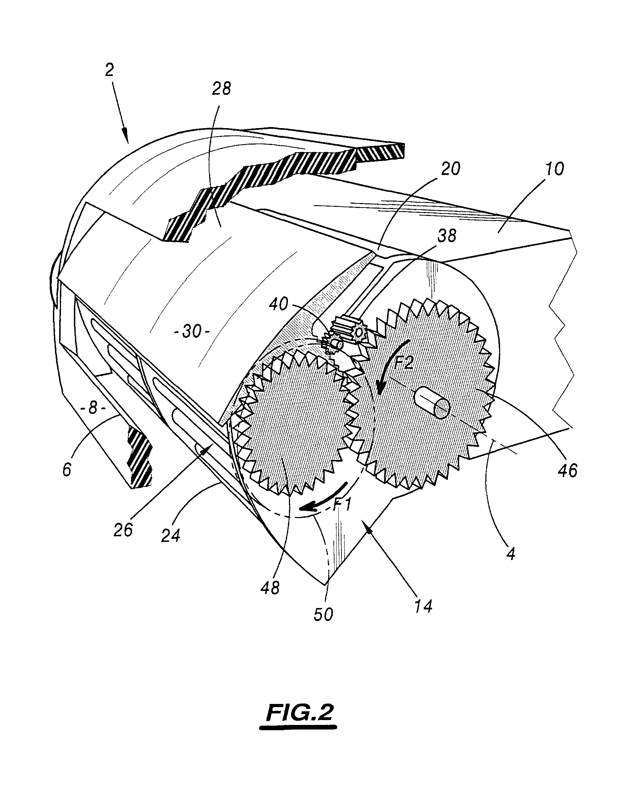

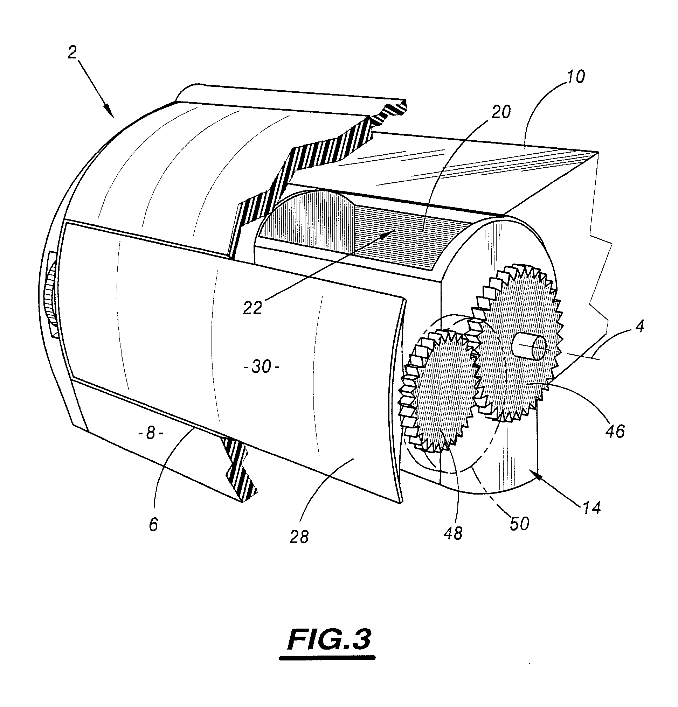

Il peut être basculé autour de cet axe 4 entre la position d'aération (figure 1) et une position de repos (figure 3), en passant par des positions intermédiaires (figure 2).

L'aérateur comprend un boîtier rigide 16 ayant une partie arrière partiellement cylindrique 18 dont l'axe est confondu avec l'axe de basculement 4. Cette partie cylindrique 18 s'applique de façon complémentaire contre l'ouverture de sortie de la conduite d'air 10. Une ouverture d'entrée 20 (voir figure 3) est ménagée dans la paroi de la partie cylindrique 18, et est alignée avec l'ouverture de sortie de la conduite d'aération 10 dans la position d'aération (figure 1). Il est à noter que la paroi de cette partie 18 comporte une partie pleine 22 située en bas en position d'aération et obturant l'ouverture de sortie de la conduite d'air 10 en position de repos.

Le boîtier d'aérateur 16 comporte en outre une partie avant formant buse 24 reliée à la partie partiellement cylindrique 18. L'ouverture de sortie 26 de la buse d'aération 24 présente une forme et une section transversale sensiblement complémentaires de celles de l'ouverture d'aération 6 de la planche de bord 8.

Un couvercle de dissimulation 28 est relié de façon mobile au boîtier 16 de l'aérateur. Le couvercle 28 est constitué d'une plaque convexe 30 ayant une surface de dissimulation de forme complémentaire de celle de l'ouverture d'aération 6 de la planche de bord 8. La surface de dissimulation présente un aspect sensiblement identique à l'aspect de la surface de la planche de bord 8 afin d'augmenter l'effet de camouflage en position de repos. Deux tiges de coulissement (dont une tige 32 est visible) s'étendent perpendiculairement à la plaque 30 des deux côtés du boîtier 16 de l'aérateur. Les deux tiges 32 sont logées, de façon à peu près radialement coulissante par rapport à l'axe de rotation 4, dans des guides 34 solidaires des surfaces frontales de l'aérateur.

Le couvercle 28 est mobile par rapport à l'aérateur entre une position rétractée comme le montre la figure 1, dans laquelle il est proche de l'aérateur 14 et, une position d'extension éloignée de l'aérateur 14, dans laquelle le couvercle 28 obture exactement l'ouverture d'aération 6 de la planche de bord 8, comme le montre la figure 3.

L'ensemble d'aérateur 2 comporte en outre des moyens de déplacement du couvercle 28 par rapport à l'aérateur 14 en fonction de la position angulaire de ce dernier (figure 2A). A cette fin, la tige 32 du couvercle 28 comporte une crémaillère 36 ménagée dans sa surface dirigée vers l'axe de basculement 4.

Un premier pignon inverseur 38 est monté rotatif sur l'aérateur. L'axe de ce pignon 38 est espacé de l'axe de basculement 4 de l'aérateur 14, et disposé parallèlement à cet axe 4. Un deuxième pignon inverseur 40 est monté rotatif sur l'aérateur 14 entre la crémaillère 36 et le premier pignon 38, et engrène de façon permanente avec ce dernier et avec la crémaillère 36. Le premier pignon inverseur 38 a une épaisseur plus importante que le deuxième pignon inverseur 40 et la tige 32, présentant ainsi une partie 42 en saillie sur le plan défini par la tige et le deuxième pignon.

Cette partie en saillie 42 permet d'entraîner le premier pignon 38 et, par l'intermédiaire du deuxième pignon, la crémaillère. Dans la position de l'aérateur proche de la position de repos, la partie en saillie 42 engrène à cet effet avec un profil denté 44 (voir ci-dessous). Au contraire, dans la position d'aération, ce premier pignon 38 n'engrène avec aucun organe d'entraînement.

Afin de basculer l'aérateur 14 entre la position d'aération et la position de repos, une roue dentée entraînée 46 est fixée sur celui-ci (figure 1). L'axe de rotation de cette roue dentée entraînée 46 est confondu avec l'axe de basculement 4 de l'aérateur. Une roue dentée d'entraînement 48 est monté sur la planche de bord 8 et engrène avec la roue entraînée 46 de l'aérateur 14. La roue dentée d'entraînement 48 comporte une molette 50 sur le côté opposé de l'aérateur. La molette 50 fait saillie sur la surface visible de la planche de bord 8 pour l'actionnement de la roue dentée d'entraînement 48.

En se référant de nouveau à la figure 2A, on voit que la roue dentée d'entraînement 48 comporte sur sa surface tournée vers l'aérateur 14 la partie à profil denté 44, qui se trouve dans le même plan que la partie en saillie 42 du premier pignon inverseur 38. Ce profil denté 44 entraîne le premier pignon inverseur 38 lorsque l'aérateur s'approche de sa position de repos. Le tracé du profil denté 44 est la résultante des deux mouvements de rotation du premier pignon 38 autour de l'axe 4 et du secteur denté 44 autour de l'axe de la molette 50.

L'aérateur selon l'invention fonctionne de la façon suivante.

On part de la position de l'aérateur 14 montré sur la figure 1.

L'aérateur 14 se trouve dans la position d'aération et refoule de l'air venant de la conduite d'air 10 vers l'intérieur du véhicule à travers l'ouverture d'aération 6. Le couvercle de dissimulation 28 est en position rétractée, sa surface de dissimulation 30 étant dirigée vers le haut. Il est entièrement escamoté dans la planche de bord.

Lorsque l'utilisateur veut arrêter le flux d'air et dissimuler l'aérateur 14, il actionne la molette 50 en rotation selon la flèche F1 de la figure 1, c'est-à-dire selon le sens des aiguilles d'une montre. Dans un premier temps, l'aérateur 14 et le couvercle 28 sont entraînés en sens contraire, d'un seul bloc, par l'intermédiaire de la roue dentée d'entraînement 48 et de la roue dentée entraînée 46. Il bascule alors vers le bas selon la flèche F2 comme le montre la figure 2.

Pendant cette phase, le couvercle 28 reste dans sa position rétractée et ne se déplace pas radialement à l'axe de basculement 4 étant donné que le premier pignon inverseur 42 n'est pas en contact avec le profil denté 44 de la roue dentée d'entraînement 48.

On voit sur la figure 2 que le bord inférieur du couvercle 28 peut facilement franchir le bord supérieur de l'ouverture d'aération 6 de la planche de bord 8 lors du basculement.

Lorsque l'aérateur 14 s'approche de sa position de repos (figure 2A), le premier pignon inverseur 38 vient en contact avec le profil denté 44 de la roue d'entraînement 48. A partir de cette position, le couvercle 28 est entraîné par ce profil denté 44, et par l'intermédiaire des deux pignons inverseurs 38, 40. Le couvercle 28 se déplace donc radialement par rapport à l'axe de basculement, selon la flèche T, vers l'ouverture d'aération 6 de la planche de bord 8, et il vient se loger dans cette ouverture 6 lorsque l'aérateur 14 atteint sa position de repos.

Simultanément, la partie pleine 22 de la paroi de l'aérateur obture l'ouverture de sortie de la conduite d'aération 10.

En variante, le profil denté 44 peut être solidaire de la planche de bord.

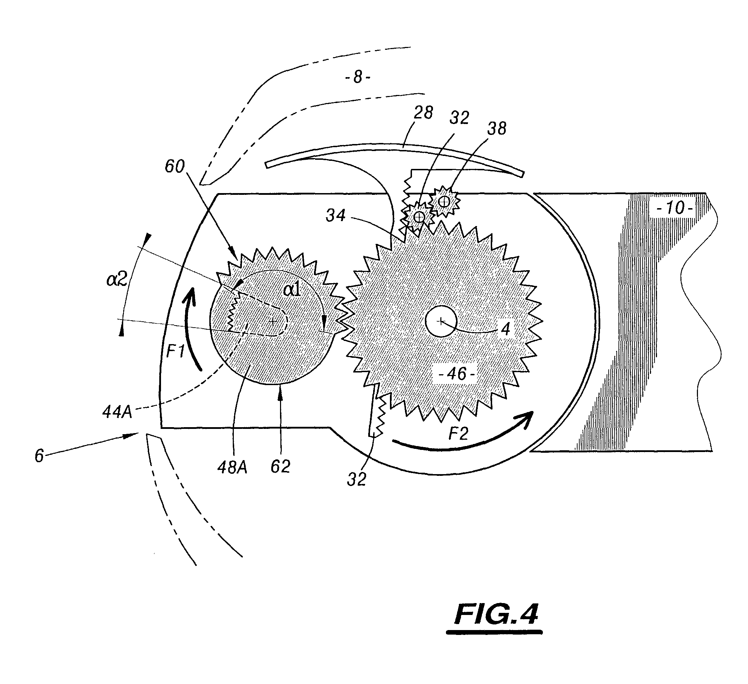

Sur la figure 4, on a représenté une variante d'un ensemble d'aérateur selon l'invention en position d'aération, la molette 50 étant omise.

Dans ce qui suit, seulement les différences par rapport à l'ensemble décrit ci-dessus seront décrites.

Les éléments identiques portent des références identiques.

La roue dentée d'entraînement 48A comporte un secteur denté d'entraînement 60 et un secteur lisse 62. Le secteur denté 60 s'étend sur un domaine angulaire α₁ correspondant au déplacement angulaire de l'aérateur 14 entre sa position de repos et sa position d'aération.

Le profil denté 44A, qui est solidaire de la roue dentée d'entraînement 48A, s'étend sur un domaine angulaire α₂ se raccordant au domaine angulaire α₁ du côté position de repos. Le tracé du profil denté 44A est un arc de cercle ayant son centre confondu avec l'axe de rotation de la molette 50.

Cet ensemble fonctionne de la façon suivante :
Lorsque le passager entraîne la molette 50, l'aérateur 14 est entraîné par le secteur denté 60 de sa position d'aération jusqu'à sa position de repos. Pendant le basculement, le couvercle 28 n'effectue aucun mouvement de translation.

Lorsque l'aérateur 14 atteint la position de repos, le secteur denté 60 se dégage de la roue dentée entraînée 46, et le profil denté 44A vient engrener avec le premier pignon inverseur 38. La suite de la rotation de la molette 50 entraîne alors le couvercle 28 en translation vers sa position de fermeture tandis que l'aérateur reste immobile.

En variante, les domaines angulaires α₁ et α₂ peuvent se chevaucher partiellement.

Il est à noter que l'entraînement de la roue dentée entraînée 46 ou de la molette 50 peut être effectué par d'autres moyens, par exemple un moteur électrique, un levier, etc.

De plus, le dispositif selon l'invention peut être utilisé pour le réglage de la direction vers le haut/vers le bas du flux d'air dans certaines limites.

Afin d'empêcher des flux d'air involontaires/parasites d'entrer dans l'habitacle du véhicule, le couvercle ou l'ouverture d'aération peut être muni d'un joint d'étanchéité.

On constate que l'ensemble d'aérateur selon l'invention permet de dissimuler complètement l'aérateur lorsque celui-ci n'est pas utilisé tout en diminuant les restrictions concernant la forme de l'emplacement pour l'aérateur de la planche de bord derrière laquelle l'aérateur est installé.

En effet, les relations de transmission des roues dentées, des pignons et de la crémaillère sont choisis en fonction de la forme de la planche de bord.

De plus, l'aérateur, les pignons et le couvercle forment un module qui peut être préfabriqué, et installé en une seule opération derrière la planche de bord, menant ainsi à un faible coût de montage.

L'aérateur, étant fixé en translation par rapport à la conduite d'aération, peut se raccorder à celle-ci par le profil en arc de cercle, économisant ainsi un tuyau souple de raccordement.

## Revendications

1. Ensemble d'aérateur occultable destiné à être installé derrière une ouverture d'aération (6) ménagée dans un équipement intérieur (8) d'un véhicule automobile, du type comportant:
- un aérateur (14) comprenant une buse d'aération (24) et une ouverture d'entrée (20) d'un flux d'air, et
- un couvercle de dissimulation (28) de forme sensiblement complémentaire à celle de l'ouverture d'aération (6),
l'aérateur (14) étant articulé autour d'un axe de rotation (4) par rapport audit équipement (8), entre une position angulaire d'aération dans laquelle la buse d'aération (24) est sensiblement alignée avec l'ouverture d'aération (6) et une position angulaire de repos dans laquelle le couvercle de dissimulation (28) recouvre l'ouverture d'aération (6),
**caractérisé en ce que** le couvercle de dissimulation (28) est relié à l'aérateur (14) de façon mobile radialement par rapport à l'axe de rotation (4).

2. Ensemble selon la revendication 1, **caractérisé en ce que** le couvercle de dissimulation (28) est relié à l'aérateur (14) de façon mobile en translation perpendiculairement par rapport à l'axe de rotation (4).

3. Ensemble selon la revendication 1 ou 2, **caractérisé en ce que** le couvercle (28) est une plaque (30), notamment convexe, de forme complémentaire de celle de l'ouverture d'aération (6).

4. Ensemble selon l'une quelconque des revendications 1 à 3, **caractérisé en ce qu** 'il comprend des moyens de déplacement (36, 38, 40, 44 ; 44A) du couvercle (28) par rapport à l'aérateur (14) en fonction de la position angulaire de l'aérateur, ces moyens déplaçant le couvercle,
- entre une position d'extension dans laquelle le bord extérieur de ce couvercle (28) est sensiblement aligné avec le bord de ladite ouverture (6) lorsque l'aérateur (14) se trouve sensiblement en position de repos, et
- une position rétractée dans laquelle le couvercle (28) est décalé vers l'axe de rotation (4) par rapport au bord de ladite ouverture (6) lorsque l'aérateur (14) est éloigné de sa position de repos.

5. Ensemble selon la revendication 4, **caractérisé en ce que** les moyens de déplacement du couvercle comprennent les éléments dentés suivants, qui ont tous des axes parallèles audit axe de rotation :
- un organe denté (44 ; 44A) monté sur ledit équipement,
- au moins un pignon inverseur (38) monté rotatif sur l'aérateur (14), l'axe de ce pignon (38) étant espacé de l'axe de rotation (4) de l'aérateur,
- une crémaillère (36) solidaire du couvercle (28) et en prise avec le pignon inverseur (38), le pignon inverseur (38) venant en prise avec l'organe denté (44 ; 44A) lorsque l'aérateur (14) arrive près de sa position de repos.

6. Ensemble selon la revendication 5, **caractérisé en ce qu'**il comprend un deuxième pignon inverseur (40) monté rotatif entre le premier pignon inverseur (38) et la crémaillère (36), et en prise avec ceux-ci.

7. Ensemble selon l'une quelconque des revendications 1 à 6, **caractérisé en ce que** l'aérateur (14) comporte en outre une roue dentée entraînée (46), fixée sur celui-ci et à axe confondu avec ledit axe de rotation (4), cette roue dentée entraînée (46) engrenant avec une roue dentée d'entraînement (48 ; 48A) montée sur ledit équipement (8).

8. Ensemble selon la revendication 5 ou 6, et la revendication 7 prises ensemble, **caractérisé en ce que** :
- la roue dentée d'entraînement (48A) comporte un secteur denté (60) d'entraînement s'étendant sur un secteur angulaire (α₁) de l'aérateur (14) entre la position d'aération et la position de repos, et un secteur dépourvu de dents (62) ;
- l'organe denté (44A) est monté rotatif sur ledit équipement (8) et est solidaire en rotation avec la roue dentée d'entraînement (48A) et comporte un secteur denté (44A) s'étendant angulairement (α₂) au moins partiellement en dehors du secteur denté d'entraînement angulaire (α₁).

9. Ensemble selon la revendication 7 dépendant de la revendication 5 ou 6, ou selon la revendication 8, **caractérisé en ce que** l'organe denté (44) et la roue dentée d'entraînement (48) sont solidaires l'un de l'autre.

10. Ensemble selon la revendication 5 ou 6, ou la revendication 7 dépendant de la revendication 5 ou 6, **caractérisé en ce que** l'organe denté est solidaire dudit équipement.

11. Ensemble selon l'une quelconque des revendications 1 à 10, **caractérisé en ce que** le couvercle (28) ou l'ouverture d'aération (6) comporte un joint d'étanchéité sur son bord.

12. Ensemble selon l'une quelconque des revendications 1 à 11, **caractérisé en ce que** l'aérateur (14) comporte sur sa partie d'ouverture d'entrée (20) un profil de révolution (18) autour de l'axe de rotation (4), et
**en ce que**, à l'état monté, ce profil (18) s'applique contre l'ouverture de sortie d'une conduite d'air (10) à profil complémentaire.

13. Ensemble selon l'une des revendications 1 à 12, **caractérisé en ce que** l'axe de rotation (4) est disposé sensiblement horizontalement.

14. Ensemble selon l'une des revendications 1 à 13, **caractérisé en ce que** le couvercle de dissimulation (28) comporte une surface d'aspect sensiblement identique à l'aspect de la surface visible dudit équipement (6).

15. Equipement pour véhicule automobile comprenant un ensemble selon l'une des revendications 1 à 14.

16. Equipement selon la revendication 15, **caractérisé en ce qu'**il constitue au moins une partie d'une planche de bord (8) de véhicule automobile.
